Europäisches Patentamt

European Patent Office

Office européen des brevets

(19)

(11) **EP 1 369 824 A2**

(12) **EUROPÄISCHE PATENTANMELDUNG**

(43) Veröffentlichungstag:
**10.12.2003 Patentblatt 2003/50**

(51) Int Cl.7: **G06T 17/30**

(21) Anmeldenummer: 03011106.6

(22) Anmeldetag: **21.05.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **07.06.2002 DE 10226270**

(71) Anmelder: **CoCreate Software GmbH & Co. KG
71065 Sindelfingen (DE)**

(72) Erfinder:
• **Kellermann, Hermann Dr.
72762 Reutlingen (DE)**
• **Nygaard, Jens Olav
0770 Oslo (NO)**

(74) Vertreter: **Hössle Kudlek & Partner
Patentanwälte,
Postfach 10 23 38
70019 Stuttgart (DE)**

(54) **Verfahren und Computersystem zum Erzeugen einer mehrdimensionalen Abstandsfläche**

(57) Verfahren zum Erzeugen einer mehrdimensionalen Abstandsfläche mit einem vorgebbaren Abstand (d) zu einer Ausgangsfläche (10, 20) gleicher Dimension, bei dem zum Erzeugen eines Punktes auf der Abstandsfläche (10'') (Abstandspunkt) eine Näherungsnormale ($N_D$) bestimmt wird, die senkrecht auf einer Näherungsfläche steht, deren Lage und Verlauf näherungsweise Lage und Verlauf der Ausgangsfläche (10, 20) entspricht, wobei die Näherungsnormale ($N_D$) mit der Ausgangsfläche (10, 20) einen Schnittpunkt ($S_3$) bildet, der den Punkt der Ausgangsfläche (10, 20) bildet, zu dem der zugehörige Abstandspunkt erzeugt werden soll, und entlang der Richtung der Näherungsnormalen ($N_D$) ausgehend von dem Schnittpunkt ($S_3$) in einer Entfernung entsprechend dem vorgegebenen Abstandswert (d) der Abstandspunkt erzeugt wird, wobei eine Vielzahl von derart gewonnenen Abstandspunkten zur Bildung der Abstandsfläche (10'') dient.

Fig 1

**Beschreibung**

Die vorliegende Erfindung betrifft ein (computergestütztes) Verfahren und ein Computersystem zum Erzeugen einer n-dimensionalen Abstandsfläche, wobei n eine natürliche Zahl > 1 ist. Insbesondere betrifft die vorliegende Erfindung das computergestützte Erzeugen von zweidimensionalen Abstandskurven und dreidimensionalen Abstandsflächen im Bereich des CAD/CAM.

Zur Vereinfachung wird nachfolgend einheitlich und beispielhaft vom zweidimensionalen Fall, also einer Abstandskurve, stellvertretend für den allgemeinen Fall einer mehrdimensionalen Fläche gesprochen.

In der englischen Fachsprache wird eine Abstandskurve als "offset curve" bezeichnet. Dieser Begriff hat auch Eingang in die deutsche Fachterminologie gefunden.

Eine Abstandskurve ist eine Kurve, die im wesentlichen die gleiche Form aufweist, wie eine erste Kurve, zu dieser ersten Kurve jedoch um einen bestimmten Abstand d versetzt ist. Darunter ist jedoch nicht unbedingt eine um d verschobene Kopie der ersten Kurve zu verstehen, sondern die Ansammlung aller Punkte, die den Abstand d von den Punkten der ersten Kurve in Richtung der Normalen der ersten Kurve in dem entsprechenden Punkt aufweisen. Oder mit anderen Worten: eine Abstandsfläche ist definiert als diejenige Menge von Punkten, in der jeder Punkt in dem konstanten Abstand d zu einem entsprechenden Punkt auf der Ausgangsfläche in Richtung des Normalenvektors steht. In mathematischer Darstellung ist die Abstandskurve $C_d(t)$ einer Parameterkurve $C(t) = (x(t), y(t))$ gegeben durch

$$C_d(t) = C(t) + d \cdot N_T(t) \tag{1}$$

wobei d der Abstandswert und $N_T(t)$ der Einheitsnormalenvektor von $C(t)$ ist, d.h. die Normale auf der Tangente T im Punkt t. Einen Überblick über Abstandskurven gibt beispielsweise Binh Pham in "Offset Curves and Surfaces: A Brief Survey", Computer Aided Design 24 (1992), Seiten 223 bis 229.

Abstandsflächen und -kurven treten in vielfältigen industriellen Anwendungen auf, so beispielsweise bei der Roboterpfadplanung und der Erzeugung von Werkzeugpfaden für die numerische Steuerung in der industriellen Fertigung. Üblicherweise erfolgt eine Darstellung in parametrischer Form, da die Parameter eine direkte Zuordnung zwischen einer Kurve und ihrem "Offset" (also der zugehörigen Abstandskurve) darstellen.

Die Erzeugung von Abstandskurven und -flächen ist aus mehreren Gründen kein einfaches Unterfangen. So kann es beispielsweise keinen eindeutigen Offset geben, weil es in einem gegebenen Punkt der Ausgangskurve mehr als eine Normalenrichtung gibt (so zum Beispiel an Stellen tangentieller Diskontinuität entsprechend einer Unstetigkeit in der zweiten Ableitung). Die Form der Abstandskurve hängt nicht nur von der Form der Ausgangskurve ab, sondern auch von dem Abstandswert (offset distance), der Ausrichtung und auch der lokalen Krümmung. Ist die Ausgangskurve durch sogenannte Splines dargestellt, dann ist die erhaltene Abstandskurve in der Regel kein Spline. Splines werden zur Näherung komplexer Kurven und Flächen in der CAD-Konstruktion verwendet und können über unstete Stellen in ihren zweiten Ableitungen verfügen. Auf die den Splines zugrundeliegende Theorie soll hier nicht weiter eingegangen werden, da sie dem Fachmann geläufig ist. Rein beispielhaft wird hierzu auf die DE 100 23 377 A1 und auf "A Practical Guide to Splines" von C. de Boor, Springer Verlag, 1978 verwiesen.

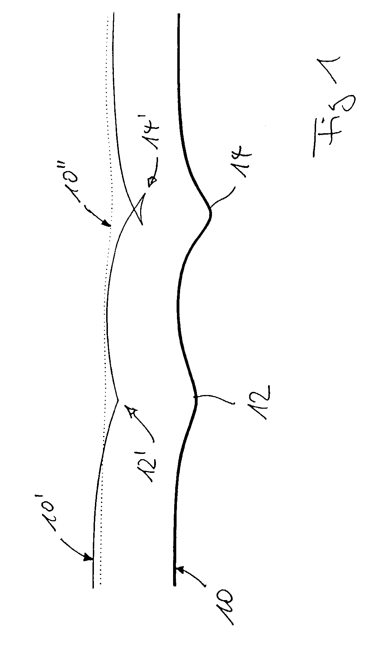

Eines der Probleme beim Erzeugen von Abstandskurven ist, daß die Ebenheit/Glätte und Schnittstelleneigenschaften der ersten Kurve (Ausgangskurve) nicht zwingend übertragen werden. So kann beispielsweise eine vollkommen glatte Ausgangskurve bei einem gegebenen Abstandswert eine sich selbst schneidende und nicht-glatte Abstandskurve haben. Diese Problematik ist beispielhaft in der Figur 1 dargestellt.

Zur Behebung der Nachteile bei der Erzeugung von Abstandskurven wurden im Stand der Technik bereits Näherungsverfahren vorgeschlagen (vgl. den bereits erwähnten Artikel von Binh Pham sowie Gershon Elber u.a. in "Comparing Offset Curve Approximation Methods", IEEE Computer Graphics and Applications, 1997, Seiten 62 bis 71. Die meisten der bekannten Verfahren erzeugen mittels iterativer Techniken eine Näherungskurve, deren Genauigkeit gemessen wird und bei Überschreiten der Toleranz in einem unterteilten Bereich der Fehler durch weitere Näherung behoben wird.

Ausgehend hiervon liegt der Erfindung die Aufgabe zugrunde, ein Verfahren bereitzustellen, mit dem im Bereich der computergestützten Kurven- und Flächenerzeugung Abstandskurven erzeugt werden, die sich nicht selbst schneiden, wobei die Differenz zwischen dem Abstand, den ein Punkt auf der gegebenen Ausgangsfläche entlang einer Normalen zu der erzeugten Abstandsfläche hat, und dem Abstandswert kleiner ist als eine gegebene bzw. vorgebbare Toleranz.

Zur Lösung dieser Aufgabe wird erfindungsgemäß ein Verfahren mit den Merkmalen des Anspruchs 1 sowie ein Computersystem mit den Merkmalen des Anspruchs 7 vorgeschlagen. Vorteilhafte Weiterbildungen sind in den Unteransprüchen beschrieben.

Der Erfindung liegt die Erkenntnis zugrunde, daß eine Abstandsfläche bzw. -kurve innerhalb gewisser Toleranzen anhand einer Näherungsnormalen anstelle der üblichen Standardnormalen erzeugt werden kann. Während die Standardnormale ("konventionelle" Normale) entsprechend den Eigenschaften eines Normalenvektors an jeder Stelle der Ausgangskurve senkrecht auf dieser steht, steht die Näherungsnormale nicht immer senkrecht auf der Ausgangskurve, sondern sie steht senkrecht auf einer Näherung der Ausgangskurve. Es gilt also

$$C^{D}_{d}(t) = C(t) + d \cdot N_{D}(t) \qquad (2)$$

wobei $N_{D}(t)$ die Näherungseinheitsnormale ist, die zu $N_{T}(t)$ parallel sein kann, aber dies häufig, insbesondere bei Ausschlägen und Unebenheiten im Kurvenverlauf, nicht ist, und $C^{D}_{d}(t)$ die anhand der erfindungsgemäßen Näherungsnormalen gewonnene Abstandskurve ist. Die Erfindung hat zur Folge, daß kleine Abweichungen in der Ausgangskurve wie Unebenheiten usw. unbeachtet bleiben, und somit eine der Ursachen für sich selbst schneidende Abstandskurven ausgeräumt wird. Als weiterer Vorteil der Erfindung ist festzustellen, daß die erzeugte Abstandskurve glatter ist als die Ausgangskurve und auch weniger Daten umfaßt, so daß sie weniger Speicherplatz benötigt. Durch die beschriebene Ausräumung von Unebenheiten in der Ausgangskurve ist die Erfindung besonders in der Anwendung auf Splines geeignet.

Erfindungsgemäß wird zur Bestimmung der Näherungsnormalen eine Näherungskurve erzeugt, deren Lage und Verlauf Lage und Verlauf der Ausgangskurve angenähert ist. In vorteilhafter Ausgestaltung erfolgt diese Näherung durch ein Glätten der Ausgangskurve.

Die Näherungsnormale ist dann eine Senkrechte auf der Näherungskurve, deren Schnittpunkt mit der Ausgangskurve den Punkt bildet, zu dem der zugehörige Abstandspunkt auf der Abstandskurve gebildet werden soll. Dessen Erzeugung bzw. Berechnung erfolgt entlang der Richtung der Näherungsnormalen ausgehend von dem Schnittpunkt in einer Entfernung entsprechend dem vorgegebenen Abstandswert. Mehrere derart gebildete Abstandspunkte dienen dann zur Bildung der gewünschten Abstandskurve. Die Bildung der Abstandskurve aus der Vielzahl von Abstandspunkten erfolgt nach an sich bekannten Verfahren der Interpolation.

In besonders vorteilhafter Weiterbildung der Erfindung erfolgt das Glätten der Ausgangsfläche durch sukzessives Festlegen eines Punktepaares auf der Ausgangsfläche und Bilden einer durch das Punktepaar verlaufenden Sekante, wobei die Richtung der Näherungsnormalen durch die Senkrechte zu der Sekante gegeben ist. Vorzugsweise ist die Senkrechte zu der Sekante die Mittelsenkrechte auf der Sekante zwischen den beiden Punkten des Punktepaares. Dieses erfindungsgemäße Vorgehen erlaubt ein sehr einfaches und schnelles und somit auch bei vergleichsweise geringem Arbeitsspeicher ausführbares Glätten der Ausgangskurve. Somit können gleiche Kurven in kürzerer Zeit bzw. in gleicher Zeit größere Datenmengen bearbeitet werden.

Die Erfindung umfaßt ein Verfahren und ein Computersystem zum Erzeugen einer mehrdimensionalen Abstandsfläche sowie ein Computerprogramm mit Programmcodemitteln, die bei Ablauf des Computerprogrammes auf einem Computer dazu geeignet sind, ein erfindungsgemäßes Verfahren durchzuführen. Insbesondere wird Schutz begehrt für jedes Erzeugnis, das geeignet ist, ein erfindungsgemäßes Verfahren auszuführen, und insbesondere für eine programmierte Umsetzung der Erfindung in all ihren Erscheinungsformen, sei es als Computerprogramm, das über das Internet zum Herunterladen angeboten ist und in diesem Moment auf einem Serverspeicher gespeichert ist, sei es als auf einem computerlesbaren Medium gespeicherte programmierte Verfahrensanweisung (Algorithmus).

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im folgenden unter Bezugnahme auf die Zeichnung ausführlich beschrieben.

Figur 1   zeigt eine Ausgangskurve mit durchgezogenem konventionellen Offset und mit einem erfindungsgemäßen Offset in gepunkteter Darstellung.

Figur 2   veranschaulicht den Unterschied zwischen einem konventionellen Normalenvektor, der senkrecht auf einer Tangente durch einen gegebenen Punkt der Ausgangskurve steht, und einem erfindungsgemäßen Näherungsnormalenvektor.

Figur 1 zeigt eine fett durchgezogen dargestellte Ausgangskurve 10 mit einer zugehörigen konventionellen Abstandskurve 10', die mit dünner durchgezogener Linie gezeichnet ist, sowie einer gepunktet dargestellten erfindungsgemäßen Abstandskurve 10". Wie aus Figur 1 ersichtlich ist, weist die konventionelle Abstandskurve 10' den Nachteil auf, daß ihr Verlauf Unzulänglichkeiten aufweist, wie sie bei konventionellen Abstandskurven, deren Punkte gemäß der Formel (1) bestimmt sind, häufig auftreten. Die in der Darstellung der Figur 1 linke Vertiefung 12 der Ausgangskurve 10 weist im Verlauf der Abstandskurve 10' einen Knick ("kink") 12' auf, während bei der Durchführung des Offsets aus der rechten Vertiefung 14 der Ausgangskurve 10 eine sich selbst schneidende Schleife 14' wurde. Dies ist jedoch für praktische Anwendungen inakzeptabel und wurde in der Vergangenheit entweder dadurch gelöst, daß die erhaltene Abstandskurve nochmals auf derartige Unzulänglichkeiten abgetastet wurde, um diese Unzulänglichkeiten mit mathematischen Algorithmen zu beheben, oder durch die Anwendung von eingangs bereits erwähnten Näherungsverfahren.

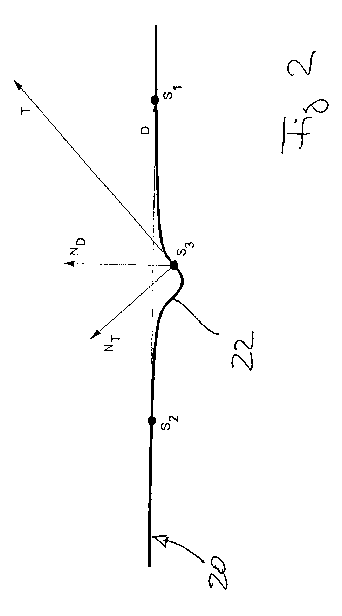

Unter Bezugnahme auf die Darstellung der Figur 2 wird nachfolgend die prinzipielle Funktionsweise der Erfindung beschrieben.

Figur 2 zeigt eine Ausgangskurve 20 mit einer Vertiefung ("ditch") 22. Es soll nun die Erzeugung des einem in der Vertiefung liegenden Punkt $S_3$ der Ausgangskurve 20 zugeordneten Abstandspunkt betrachtet werden.

Bei konventionellem Vorgehen wird anhand der durch den Punkt $S_3$ gehenden Tangente T an die Ausgangskurve 20 der Normalenvektor $N_T$ bestimmt, der somit senkrecht auf der Ausgangskurve 20 in deren Punkt $S_3$ steht. Aufgrund der relativ starken Steigung der Ausgangskurve 20 im Bereich der Vertiefung 22 "kippt" die Normale zur Seite, wodurch ein Verlauf der Abstandskurve entsteht, wie er in Figur 1 mit der sich selbst schneidenden Schleife 14' dargestellt ist.

Erfindungsgemäß wird dies vermieden, indem eine Näherungsnormale $N_D$ erzeugt wird. Die Näherungsnormale $N_D$ wird mittels eines Punktepaares $(S_1, S_2)$ erzeugt. Dieses Punktepaar $(S_1, S_2)$ liegt auf der Ausgangskurve 20 und weist einen vorgebbaren Abstand D auf. In dem dargestellten Ausführungsbeispiel liegen die beiden Punkte $S_1$ und $S_2$ jeweils gleich weit zu beiden Seiten des Punktes $S_3$, so daß die Mittelsenkrechte auf der Verbindung D zwischen den Punkten $(S_1, S_2)$ durch $S_3$ verläuft. Diese Mittelsenkrechte stellt die Richtung der Näherungsnormalen $N_D$ dar.

Durch das erfindungsgemäße Vorgehen wird auf sehr einfache Art und Weise eine Näherungsnormale erzeugt, die den allgemeinen "Trend" des Kurvenverlaufs wiedergibt und Ausschläge bzw. Vertiefungen im Kurvenverlauf "glättet", so daß auch die entstandene Abstandskurve dem Trend der Ausgangskurve folgt und keine der vorstehend beschriebenen Unzulänglichkeiten aufweist. Die Art und Weise der Näherung wird durch Vorgabe des Abstandes D zwischen den Punkten $S_1$ und $S_2$ "eingestellt". Je weiter die beiden Punkte $S_1$ und $S_2$ auseinanderliegen, desto stärker ist der Glättungseffekt, aber desto mehr wird die Kurvenform auch begradigt und somit verfälscht. Je näher die beiden Punkte $S_1$ und $S_2$ zueinander wandern, desto geringer wird der Glättungseffekt und die Näherungsnormale nähert sich immer mehr der konventionellen Normalen $N_T$ an.

Die Erfindung liefert somit eine Abstandskurve, die innerhalb vorgebbarer Toleranzen den Kurvenverlauf der Ausgangskurve in einem vorgebbaren Abstand d zu der Ausgangskurve wiedergibt. Wie der Fachmann aus der Darstellung der Figur 2 erkennt, entspricht die Richtung der Tangente (erste Ableitung) T immer dann der Richtung D, wenn es sich um einen geraden Kurvenabschnitt handelt und beide Punkte $S_1$ und $S_2$ auf diesem geraden Kurvenabschnitt liegen. Wandert einer der beiden Punkte $S_1$ und $S_2$ in die Vertiefung 22 der Ausgangskurve, dann entspricht die Richtung von D nicht mehr der Richtung von T, obwohl an sich ein gerader Kurvenabschnitt vorliegt. In dieser Situation liegt ein "Störung" der Normalen vor, d.h. eine Abweichung von $N_D$ zu $N_T$, die aber im Vergleich zu dem vorstehend beschriebenen "Kippen" des Normalenvektors $N_T$ beim Durchlaufen der Vertiefung vernachlässigbar ist.

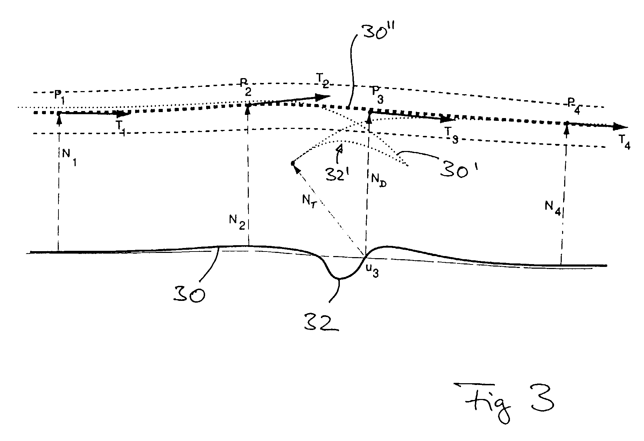

Figur 3 zeigt - ähnlich der Darstellung der Figur 1 - eine fett durchgezogen dargestellte Ausgangskurve 30 mit einer zugehörigen konventionellen Abstandskurve 30', die gepunktet dargestellt ist, sowie einer fett gepunktet dargestellten erfindungemäßen Abstandskurve 30". Auch in der Darstellung der Figur 3 ist erneut ersichtlich, wie eine Vertiefung 32 der Ausgangskurve 30 bei konventionellem Vorgehen in eine sich selbst schneidende Schleife 32' versetzt wird, während die erfindungsgemäße Abstandskurve 30" keine "Anomalität" aufweist.

Wie bereits in Zusammenhang mit Figur 2 beschrieben, wird mit dem erfindungsgemäßen Näherungsnormalenvektor $N_D$ ein Punkt auf der zu erzeugenden Abstandskurve 30" erzeugt, der in der Darstellung der Figur 3 mit $P_3$ bezeichnet ist.

Entsprechend werden durch die ebenfalls eingezeichneten normalen $N_1$, $N_2$ und $N_4$ jeweils Punkte $P_1$, $P_2$ bzw. $P_4$ auf der Abstandskurve 30'' erzeugt, die jedoch nur geringfügige Unterschiede zu den Punkten der konventionellen Abstandskurve 30' aufweisen.

Erfindungsgemäß wird aus einer einstellbaren Anzahl von Punkten $P_1$, $P_2$, $P_3$, $P_4$, ..., $P_i$ eine Abstandskurve erzeugt, indem durch ein Interpolationsverfahren eine Verfeinerung vorgenommen wird. Grundlage der Interpolation sind den jeweiligen Punkten zugeordnete Tangenten $T_1$, $T_2$, $T_3$, $T_4$, ..., $T_i$. Das Verfeinerungsverfahren besteht somit darin, eine Ansammlung (allgemein: Netz) von Punkten und zugehörigen Ableitungen (Tangenten) auszudehnen und zu interpolieren, um die endgültige Abstandskurve (bzw. im allgemeinen Fall: Abstandsfläche) zu erhalten. Die Verfeinerung wird solange fortgesetzt, bis die folgenden drei Kriterien erfüllt sind, daß (i) die Differenz zwischen dem Abstand, den ein Punkt auf der gegebenen Ausgangsfläche entlang einer normalen zu der erzeugten Abstandsfläche hat, und dem Abstandswert kleiner ist als eine gegebene bzw. vorgebbare Toleranz, daß (ii) sich die Abstandsfläche nicht selbst schneidet und daß (iii) die erzeugte Abstandsfläche sowenig wie möglich und vorzugsweise weniger Daten enthält und glatter ist als die gegebene Ausgangsfläche.

Die Erfindung wird vorzugsweise unter Verwendung der nachfolgend in Pseudocode wiedergegebenen Algorithmen, von denen einige rekursiv sind, umgesetzt.

```
Algorithm: 'RefineCurveSegment':


begin (with a curve segment as input)
    Apply Hermite interpolation and check if the approxi-
    mation is good enough.
    if (not good enough)
    begin
```

```
        Insert new (position, tangent) where most needed
        and split segment;
        RefineCurveSegment (new left subsegment);
        RefineCurveSegment (new right subsegment);
    end;
end;


Algorithm: 'SloppyCurveOffset':


begin
    Initialize grid with n (position, tangent) pairs.
    (The two corner points (with tangents) of the "stan-
    dard offset" is one possible choice, any other sensi-
    ble initial grid can be used.)
    for i = 1 step 1 until n do
    begin
        RefineCurveSegment (curve segment i);
    end;
end;


Algorithm: 'RefineCurve':


begin (with a curve with n curve segments as input.)
    for i = 1 step 1 until n do
    begin
        RefineCurveSegment (curve segment i);
    end;
end;


Algorithm: 'RefinePatch':


begin (with a patch as input)
    Apply Hermite interpolation and check if the approxi-
    mation is good enough.
    if (not good enough)
```

```
        Insert new (position, tangent) where most needed
        and split patch in the v-direction, i.e., with a
        v-curve segment.
        Split all other patches in the column likewise,
        creating a new v-curve.
        RefinePatchColumn (left new column);
        RefinePatchColumn (right new column);
        RefineCurve (new v-curve);
    end;
end;


Algorithm: 'RefinePatchColumn':


begin (with a column of n patches as input)
    for i = 1 step 1 until n do
    begin
        RefinePatch (curve segment i);
    end;
end;


Algorithm: 'SloppySurfaceOffset':


begin
    Initialize grid with n₁ x n₂ (position, tangent) en-
    tries.
    (Number of u-curves is n₂, number of v-curves is n₁.).
    (The four corner points (with tangents) of the "stan-
    dard offset" is one possible choice, any other sensi-
    ble initial grid can be used.)
    for i = 1 step 1 until n₁ do
    begin
        RefineCurve (v-curve i);
    end;
    (Note that n₁ is now different from what it was on en-
    try.)
```

```
for i = 1 step 1 until n₁ - 1 do
begin
        RefinePatchColumn (v-column i);
end;
end;
```

**Patentansprüche**

1.  Verfahren zum Erzeugen einer mehrdimensionalen Abstandsfläche mit einem vorgebbaren Abstand (d) zu einer Ausgangsfläche (10, 20) gleicher Dimension, bei dem zum Erzeugen eines Punktes auf der Abstandsfläche (10") (Abstandspunkt) eine Näherungsnormale ($N_D$) bestimmt wird, die senkrecht auf einer Näherungsfläche steht, deren Lage und Verlauf näherungsweise Lage und Verlauf der Ausgangsfläche (10, 20) entspricht, wobei die Näherungsnormale ($N_D$) mit der Ausgangsfläche (10, 20) einen Schnittpunkt ($S_3$) bildet, der den Punkt der Ausgangsfläche (10, 20) bildet, zu dem der zugehörige Abstandspunkt erzeugt werden soll, und entlang der Richtung der Näherungsnormalen ($N_D$) ausgehend von dem Schnittpunkt ($S_3$) in einer Entfernung entsprechend dem vorgegebenen Abstandswert (d) der Abstandspunkt erzeugt wird, wobei eine Vielzahl von derart gewonnenen Abstandspunkten zur Bildung der Abstandsfläche (10") dient.

2.  Verfahren nach Anspruch 1, bei dem die Näherungsfläche (10") durch Glätten der Ausgangsfläche (10, 20) gewonnen wird.

3.  Verfahren nach Anspruch 2, bei dem das Glätten der Ausgangsfläche (10, 20) durch sukzessives Festlegen eines Punktepaares ($S_1$, $S_2$) auf der Ausgangsfläche (10, 20) und Bilden einer durch das Punktepaar ($S_1$, $S_2$) verlaufenden Sekante (D) erfolgt, wobei die Richtung der Näherungsnormalen ($N_D$) durch die Senkrechte zu der Sekanten (D) gegeben ist.

4.  Verfahren nach Anspruch 3, bei dem die Senkrechte zu der Sekanten (D) die Mittelsenkrechte auf der Sekante (D) zwischen den beiden Punkten ($S_1$, $S_2$) des Punktepaares ist.

5.  Verfahren nach Anspruch 3 oder 4, bei dem ein Erzeugen der Glättungskurve anhand der Mittelpunkte aufeinanderfolgender Sekanten (D) erfolgt.

6.  Verfahren nach einem der vorstehenden Ansprüche, bei dem der Abstand der Punkte ($S_1$, $S_2$) zueinander variabel ist.

7.  Computersystem mit Speichermitteln zum Speichern von Daten, die ein auf einem oder mehreren Bildschirmen dargestelltes virtuelles Modell mit mindestens einer mehrdimensionalen Fläche definieren, wobei die mindestens eine Fläche eine Ausgangsfläche (10, 20) darstellt, zu der eine Abstandsfläche (10") zu erzeugen ist, mit Eingabemitteln, zur Eingabe eines Abstandswertes (d) und mit Berechnungsmitteln zum Berechnen einer Näherungsnormalen ($N_D$), die senkrecht auf einer Näherungsfläche steht, deren Lage und Verlauf näherungsweise Lage und Verlauf der Ausgangsfläche (10, 20) entspricht, wobei die Näherungsnormale ($N_D$) mit der Ausgangsfläche (10, 20) einen Schnittpunkt ($S_3$) bildet, der den Punkt der Ausgangsfläche (10, 20) bildet, zu dem der zugehörige Abstandspunkt zu erzeugen ist, wobei die Berechnung des Abstandspunktes entlang der Richtung der Näherungsnormalen ($N_D$) ausgehend von dem Schnittpunkt ($S_3$) in einer Entfernung entsprechend dem vorgegebenen Abstandswert (d) erfolgt und eine Vielzahl von derart berechneten Abstandspunkten zur Bildung der Abstandsfläche (10") dient.

8.  Computersystem nach Anspruch 7, bei dem zur Berechnung der Näherungsfläche eine Glättung der Ausgangsfläche (10, 20) erfolgt.

9.  Computersystem nach Anspruch 8, bei dem die Glättung der Ausgangsfläche (10, 20) durch sukzessives Festlegen

eines Punktepaares ($S_1$, $S_2$) auf der Ausgangsfläche (10, 20) und Bilden einer durch das Punktepaar ($S_1$, $S_2$) verlaufenden Sekante (D) erfolgt, wobei die Richtung der Näherungsnormalen ($N_D$) durch die Senkrechte zu der Sekanten (D) gegeben ist.

**10.** Computersystem nach Anspruch 9, bei dem die Senkrechte zu der Sekanten (D) die Mittelsenkrechte auf der Sekante (D) zwischen den beiden Punkten ($S_1$, $S_2$) des Punktepaares ist.

**11.** Computersystem nach Anspruch 9 oder 10, bei dem ein Erzeugen der Glättungskurve anhand der Mittelpunkte aufeinanderfolgender Sekanten (D) erfolgt.

**12.** Erzeugnis zum Durchführen des Verfahrens nach einem der Ansprüche 1 bis 6, wobei das Erzeugnis ein Computerprogramm mit Programmcodemitteln ist, die bei Ablauf des Computerprogrammes auf einem Computer dazu geeignet sind, ein Verfahren nach einem der Ansprüche 1 bis 5 durchzuführen.

**13.** Computerprogramm nach Anspruch 12, das auf einem computerlesbaren Medium gespeichert ist.

**14.** Computerlesbarer Datenträger mit einem darauf gespeicherten Computerprogramm, das Programmcodemittel umfaßt, die bei Ablauf des Computerprogrammes auf einem Computer dazu geeignet sind, ein Verfahren nach einem der Ansprüche 1 bis 6 durchzuführen.

**15.** Computersystem mit einem Speichermittel, in dem ein Computerprogramm mit Programmcodemitteln gespeichert ist, die bei Ablauf des Computerprogrammes auf einem Computer dazu geeignet sind, ein Verfahren nach einem der Ansprüche 1 bis 6 durchzuführen.

Fig 1

Fig 2

EP 1 369 824 A2

Fig 3